# Europäisches Patentamt

## European Patent Office

## Office européen des brevets

(19)

(11) Veröffentlichungsnummer: **0 302 187**
**B1**

(12) ## EUROPÄISCHE PATENTSCHRIFT

(45) Veröffentlichungstag der Patentschrift:
**17.10.90**

(51) Int. Cl.⁵: **B23B 31/30**

(21) Anmeldenummer: **88107289.6**

(22) Anmeldetag: **06.05.88**

(54) Spanneinrichtung an Drehmaschinen mit einem Spannfutter.

(30) Priorität: **04.08.87 DE 3725714**

(43) Veröffentlichungstag der Anmeldung:
**08.02.89 Patentblatt 89/6**

(45) Bekanntmachung des Hinweises auf die Patenterteilung:
**17.10.90 Patentblatt 90/42**

(84) Benannte Vertragsstaaten:
**ES FR GB IT SE**

(56) Entgegenhaltungen:
**DE-A- 3 102 099**
**DE-C- 3 228 749**
**DE-C- 3 518 332**

(73) Patentinhaber: **Röhm, Günter Horst,**
**Heinrich-Röhm-Strasse 50, D-7927 Sontheim(DE)**

(72) Erfinder: **Röhm, Günter Horst,**
**Heinrich-Röhm-Strasse 50, D-7927 Sontheim(DE)**
Erfinder: **Pesch, Karl, Eschenweg 8,**
**D-8880 Dillingen/Do.(DE)**

(74) Vertreter: **Fay, Hermann, Dipl.-Phys. Dr. et al, Dipl.-Phys.**
**Hermann Fay und Dr. Joachim Dziewior**
**Ensingerstrasse 21 Postfach 17 67,**
**D-7900 Ulm/Donau(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Spanneinrichtung an Drehmaschinen mit einem Spannfutter, in dessen Futterkörper Spannbacken geführt sind, zu deren Verstellung ein im Futterkörper axial verstellbares Antriebsglied vorgesehen ist, dessen Funktion durch eine auf den Drehantrieb der Maschine einwirkende Funktionskontrolleinrichtung überwacht wird und das zur Verstellung längs eines axialen Hubwegs als von einem Druckmittel beaufschlagbarer Spannkolben ausgebildet oder an einen solchen Spannkolben angeschlossen ist, wobei die Funktionskontrolleinrichtung einen außerhalb des Spannfutters feststehenden Sensor, ein den Sensor betätigendes, am Außenumfang des Futterkörpers verstellbar angeordnetes Schaltglied und einen das Schaltglied verstellenden Kontrollkolben umfaßt, der gegen die Kraft einer Rückstellfeder vom Druckmittel des Spannkolbens beaufschlagt ist und durch das Antriebsglied gegen vom Druckmittel bewirkte Verschiebungen in einer den Drehantrieb ausschaltenden Sperrstellung verriegelt bzw. verriegelbar ist, wenn das Antriebsglied außerhalb eines Arbeitsbereichs seines axialen Hubweges steht.

Derartige Spanneinrichtungen sind aus der DE-OS 31 02 099 bekannt. Die Funktionskontrolleinrichtung ermöglicht, auch bei laufendem Spannfutter, eine Kontrolle sowohl des Spannweges als auch der Spannkraft, so daß der Drehvorgang nur möglich ist, wenn die für die sichere Einspannung des Werkstückes erforderliche Wegverstellung des Antriebsgliedes im Spannfutter stattgefunden und der Spanndruck am Spannkolben sich in ausreichender Höhe aufgebaut hat. Bei den bekannten Spanneinrichtungen ist der Kontrollkolben radial im Futterkörper geführt und besitzt zu seiner Verriegelung an seinem radial inneren Ende eine Verriegelungsnase, der Verriegelungsnocken am Antriebsglied zugeordnet sind. Diese Anordnung des Kontrollkolbens bedingt in Verbindung mit der auf ihn einwirkenden Rückstellfeder radial zur Futterachse größere Bauabmessungen, die häufig unerwünscht sind. Weiter kann stören, daß am Kontrollkolben angreifende Fliehkräfte seine Stellung beeinflussen können.

Der Erfindung liegt die Aufgabe zugrunde, eine Spanneinrichtung der eingangs genannten Art in konstruktiv einfacher Weise so auszubilden, daß möglichst kleine radiale Bauabmessungen bei gleichzeitig sicherer Verriegelung des Kontrollkolbens in der Sperrstellung bei außerhalb des Arbeitsbereichs stehendem Antriebsglied erreicht werden. Außerdem soll es möglich sein, das Schaltglied und den Sensor axial möglichst weit rückwärts am Spannfutter anzuordnen, so daß die Betätigung des Sensors durch das Schaltglied nicht durch im Bearbeitungsbereich des Werkstückes, also vor der vorderen Stirnseite des Spannfutters, entstehende Späne und Schmutz beeinträchtigt werden kann.

Diese Aufgabe wird nach der Erfindung dadurch gelöst, daß der parallel zur Futterachse verschiebbar angeordnete Kontrollkolben über ein Keilgetriebe mit einem radial zur Futterachse verschiebbar im Futterkörper geführten Steuerbolzen gekuppelt ist, dem als seinen Verschiebungsweg radial einwärts begrenzender Anschlag eine mit dem antriebsglied bewegte Steuerkurve zugeordnet ist, wobei das Keilgetriebe so ausgebildet ist, daß eine Verschiebung des Kontrollkolbens aus seiner Sperrstellung mit einer radial einwärts gerichteten Verschiebung des Steuerbolzens verbunden ist.

Der zur Drehachse des Spannfutters parallele Verstellweg des Kontrollkolbens ermöglicht sehr geringe radiale Bauabmessungen, ohne daß hinsichtlich der Führungslänge des Kontrollkolbens im Futterkörper oder der Länge der Rückstellfeder Nachteile in Kauf genommen zu werden brauchen. Gleichzeitig ist die Verstellung des Kontrollkolbens nicht mehr durch am Kontrollkolben angreifende Fliehkräfte beeinflußt. Der mit dem Kontrollkolben über das Keilgetriebe gekuppelte Steuerbolzen besitzt zwar nach wie vor einen radialen Verstellweg, jedoch so geringe Masse, daß die an ihm entstehenden Fliehkräfte sich nicht über das Keilgetriebe auf eine Verstellung des Kontrollkolbens auswirken können. Im übrigen wirken diese Fliehkräfte auf den Steuerbolzen in der Richtung seiner Verriegelungsbewegung, so daß solche Fliehkräfte allenfalls zu einer Verschiebung des Kontrollkolbens in die Sperrstellung und damit zu einem Stillsetzen der Drehmaschine, nicht aber dazu führen können, daß die Funktionskontrolleinrichtung unwirksam wird. Schließlich kann die zur Drehachse des Spannfutters parallele Verstellung des Kontrollkolbens leicht an beliebiger Stelle axial längs des Spannfutters auf das Schaltglied übertragen werden, so daß das Schaltglied entsprechend an beliebiger Stelle axial längs des Futterkörpers, insbes. also auch am Futterkörper möglichst weit rückwärts, angeordnet sein kann. Schließlich wird auch eine einfache Betätigung des Steuerbolzens durch das Antriebsglied erreicht, weil der Steuerbolzen für den Fall der Verriegelung lediglich im Druckkontakt mit der am Antriebsglied vorgesehenen Steuerkurve zu stehen braucht.

In bevorzugter Ausführungsform sind der Kontrollkolben und der Steuerbolzen durch das Keilgetriebe aneinander zwangsgeführt, wozu das Keilgetriebe aus einem zu den Achsen von Kontrollkolben und Steuerbolzen geneigt angeordneten Keilsteg und einer ihn aufnehmenden Keilnut besteht. Der Keilsteg kann sich am Kontrollkolben oder Steuerbolzen und entsprechend die Keilnut am Steuerbolzen bzw. Kontrollkolben befinden. In jedem Fall wird durch diese Zwangsführung erreicht, daß die Stellung des Steuerbolzens eindeutig mit der des Kontrollkolbens verknüpft ist, so daß insbesondere die für den Kontrollkolben ohnehin vorgesehene Rückstellfeder auch über das Keilgetriebe die Rückstellung des Steuerbolzens bewirkt, für den Steuerbolzen also keine eigene Rückstellfeder vorgesehen zu werden braucht.

In weiter bevorzugter Ausführungsform ist am Kontrollkolben axial formschlüssig eine im Futterkörper axial verschiebbare Steuerstange angeschlossen, durch die das Schaltglied axial verstellbar ist. Dadurch wird erreicht, daß die Länge des Kontrollkolbens nicht durch den Ort des Schaltglieds am Spannfutter bestimmt ist, vielmehr jeder axiale Abstand zwischen dem Kontrollkolben und dem Schaltglied durch entsprechende Länge der Steuerstange überbrückt werden kann. Im einzelnen ist das Schaltglied zweckmäßig ein über die Mantelfläche des Futterkörpers radial abstehender Schaltnocken, der in eine Axialnut des Futterkörpers geführt ist und durch einen Schlitz im Nutboden hindurch mit der Steuerstange in Verbindung steht.

Unabhängig von der Lage des Schaltglieds axial am Futterkörper kann der Kontrollkolben möglichst weit vorn im Spannfutter angeordnet werden. Eine in diesem Zusammenhang bevorzugte Ausführungsform ist dadurch gekennzeichnet, daß der Kontrollkolben einen axial aus der vorderen Stirnseite des Futterkörpers vorstehenden Kolbenhals aufweist, in dem sich eine von der Stirnseite her zugängliche Einstellschraube befindet, mit der die Kraft der Rückstellfeder einstellbar ist. Eine konstruktiv besonders vorteilhafte Ausführungsform ist dadurch gekennzeichnet, daß der Kontrollkolben eine die Rückstellfeder aufnehmende Längsbohrung aufweist, in der sich die Rückstellfeder in Form einer Schraubenfeder über ein in der Längsbohrung verschiebbares Widerlager gegen die Einstellschraube abstützt, und daß die Rückstellfeder mit ihrem aus der Längsbohrung herausragenden anderen Ende am Futterkörper anliegt. Der mit dem Druckmittel beaufschlagbare Zylinderraum des Kontrollkolbens kann durch eine im Futterkörper zu dessen Stirnseite hin offene Bohrung gebildet sein, die stirnseitig durch einen Zylinderdeckel verschlossen ist, durch den hindurch der Kolbenhals abgedichtet geführt ist. Zweckmäßig ist der Zylinderdeckel bündig mit der Stirnseite des Futterkörpers.

Hinsichtlich der Steuerkurve empfiehlt sich eine Ausführungsform, bei der die Steuerkurve durch den Boden einer axial am Antriebsglied verlaufenden Steuernut gebildet ist, in die der Steuerbolzen mit einem Bolzenkopf eingreift. Die Steuerkurve besitzt im Bereich beider axialer Kurvenenden radial auswärts gerichtete Steuervorsprünge, deren axiale Länge jeweils einem Sicherheitsbereich des axialen Hubwegs des Antriebsglieds entspricht, der an den Arbeitsbereich anschließt und in dem über den Steuerbolzen der Kontrollkolben in der Sperrstellung gehalten ist. Die Steuervorsprünge schließen zweckmäßig über Anlaufschrägen an den zwischen den Steuervorsprüngen liegenden, dem Arbeitsbereich des Antriebsglieds entsprechenden Teil der Steuerkurve an, und entsprechende Anlaufschrägen sind an dem der Steuerkurve anliegenden Kopf des Steuerbolzens vorgesehen, so daß im Ergebnis bei einer Verstellung des Antriebsglieds aus dem Arbeitsbereich in einen der beiden Sicherheitsbereiche der Steuerbolzen über die Anlaufschrägen von den Steuervorsprüngen radial auswärts und damit der Kontrollkolben über das Keilgetriebe in die Sperrstellung gedrückt wird.

Im folgenden wird die Erfindung an einem in der Zeichnung dargestellten Ausführungsbeispiel näher erläutert; es zeigen:

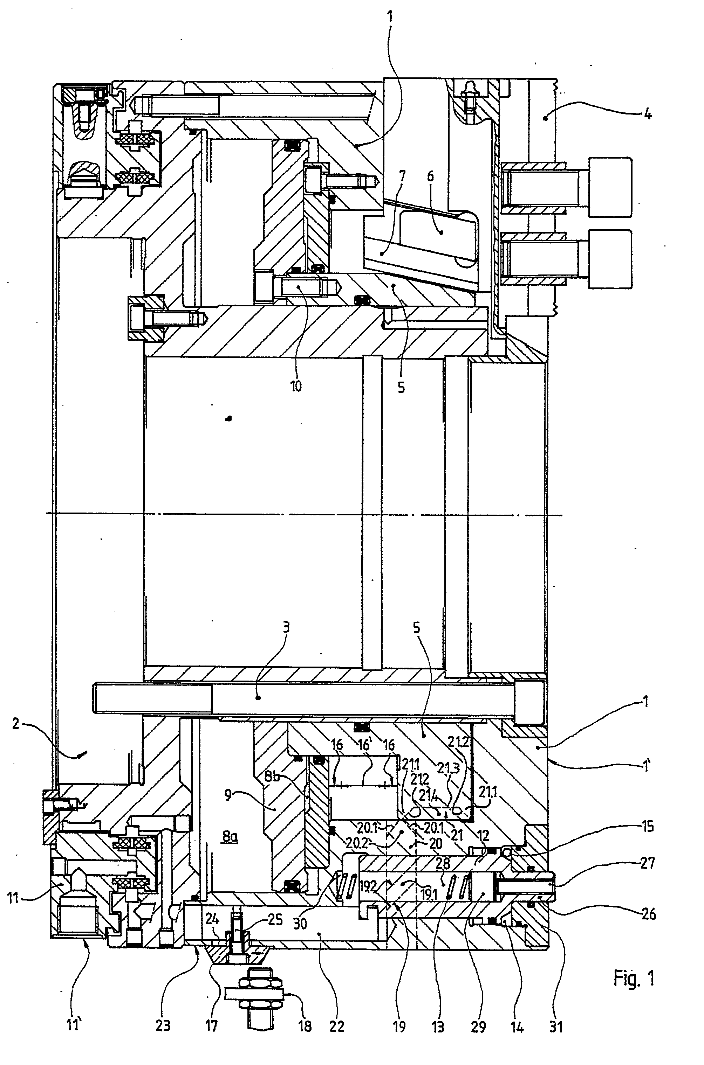

Fig. 1 einen Axialschnitt durch ein Spannfutter nach der Erfindung,

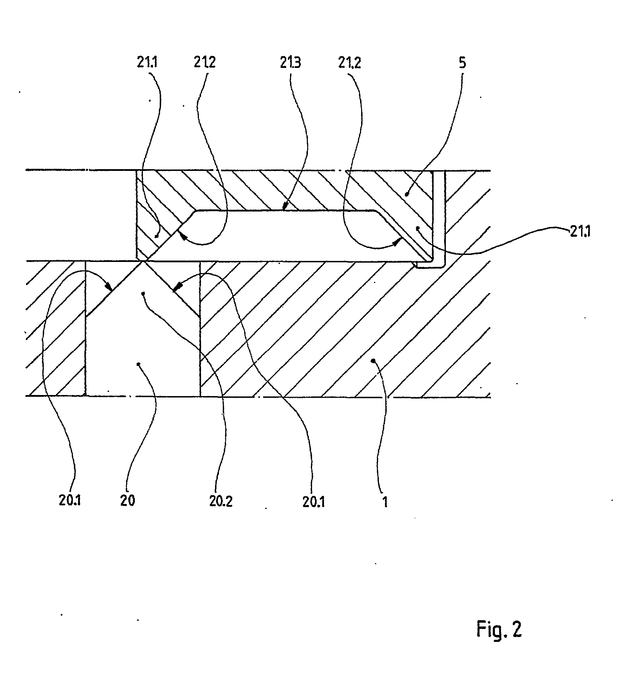

Fig. 2 das Detail betreffend den Steuerbolzen und die Steuerkurve entsprechend Fig. 1 in vergrößerter Darstellung.

Das in der Zeichnung dargestellte Spannfutter besitzt einen Futterkörper 1, der über eine Ausdrehung 2 mit Hilfe von Schrauben 3 an der Stirnseite einer nicht dargestellten Drehmaschinenspindel befestigt werden kann.

Im Futterkörper 1 sind radial Spannbacken 4 geführt, von welchen in der Zeichnung nur eine dargestellt ist. Zur radialen Verstellung der Spannbacken 4 ist ein im Futterkörper 1 axial verstellbares Antriebsglied 5 vorgesehen. Im Ausführungsbeispiel steht das Antriebsglied 5 über eine Keilhakenverbindung mit den Spannbacken 4 im Eingriff, wobei der Keilhaken 6 fest am Antriebsglied 5, der Keilhaken 7 fest am der Spannbacke 4 sitzt. In der Zeichnung ist das Antriebsglied 5 in seiner rechten Endstellung gezeigt. Dies entspricht der äußeren radialen Endstellung der Spannbacken 4, also bei Außenspannung des nicht dargestellten Werdstücks dem offenen Zustand des Spannfutters. Wird das Antriebsglied 5 in der Zeichnung nach links bewegt, verstellen sich die Spannbacken 4 radial nach innen und spannen das Werkstück ein. Der Spannhub des Antriebsgliedes 5 ist also in der Zeichnung nach links gerichtet. Statt der Keilhakenverbindung zwischen den Spannbacken 4 und dem Antriebsglied 5 können auch andere geeignete Antriebsverbindungen Verwendung finden.

Zur Verstellung des Antriebsgliedes 5 dient ein im Ausführungsbeispiel unmittelbar in einem Ringzylinderraum 8a, 8b des Futterkörpers 1 verschiebbarer Spannkolben 9, der durch Schrauben 10 fest mit dem Antriebsglied 5 verbunden ist. Zur Beaufschlagung des Spannkolbens 9 mit Druckmittel ist außen auf dem Futterkörper 1 drehbar ein Anschlußring 11 gelagert, der Anschlußöffnungen 11' für die Zu- und Abfuhr des Druckmittels aufweist. Gelangt das Druckmittel in den auf der rechten Seite des Spannkolbens 9 befindlichen Zylinderraum 8b so erfolgt der Spannhub, im anderen Fall der Lösehub. Die Verhältnisse drehen sich entsprechend um, wenn statt der angenommen Außenspannung eine Innenspannung erfolgen soll, der Spannhub der Spannbacken 4 also radial nach außen gerichtet ist.

Zur Überwachung des Spannvorgangs ist eine auf den Drehantrieb der nicht dargestellten Maschine einwirkende Funktionskontrolleinrichtung vorgesehen. Sie umfaßt einen außerhalb des Spannfutters feststehenden Sensor 18, ein den Sensor betätigendes, am Außenumfang des Futterkörpers verstellbar angeordnetes Schaltglied 17 und einen das Schaltglied verstellenden Kontrollkolben 12, der gegen die Kraft einer Rückstellfeder 13 vom Druckmittel des Spannkolbens 9 beaufschlagt ist, wozu zwischen den Zylinderräumen 8a, 8b des Spannkolbens 9 und dem Zylinderraum 14 des Kontrollkolbens 12 geeignete, in der Zeichnung lediglich bei 15 erkennbare Verbindungskanäle bestehen. Der Kontrollkolben 12 ist gegen vom Druckmittel bewirkte Verschiebungen in einer den Drehantrieb ausschaltenden Sperrstellung verriegelt oder in diese Sperrstellung verstellbar, wenn das Antriebsglied 5 in zwei in der Zeichnung durch die Doppelpfeile 16 angedeuteten Sicherheitsbereichen an den Enden seines axialen Hubweges steht. Der dem Arbeitsbereich des Antriebsgliedes 5 entsprechende Teil des axialen Hubweges ist durch den Doppelpfeil 16' gekennzeichnet. Der Kontrollkolben 12 ist parallel zur Futterachse verschiebbar angeordnet und über ein Keilgetriebe 19 mit einem radial zur Futterachse verschiebbar im Futterkörper1 geführten Steuerbolzen 20 gekuppelt. Diesem Steuerbolzen 20 ist eine mit dem Antriebsglied 5 bewegte Steuerkurve 21 zugeordnet, die als Anschlag zur Begrenzung des radial einwärts gerichteten Verschiebungswegs des Steuerbolzens 20 wirkt. Das Keilgetriebe 19 ist dabei so ausgebildet, daß eine Verschiebung des Kontrollkolbens 12 aus seiner Sperrstellung mit einer radial einwärts gerichteten Verschiebung des Steuerbolzens 20 verbunden ist. Der Kontrollkolben 12 und der Steuerbolzen 20 sind durch das Keilgetriebe aneinander zwangsgeführt, so daß die Stellungen des Kontrollkolbens 12 und des Steuerbolzens 20 eindeutig einander zugeordnet sind. Dazu besteht das Keilgetriebe 19 aus einem zu den Achsen von Kontrollkolben 12 und Steuerbolzen 20 geneigt angeordneten Keilsteg 19.1 und einer ihn aufnehmenden Keilnut 19.2, die in der Zeichnung lediglich gestrichelt angedeutet sind, da sich je nach Zweckmäßigkeit der Keilsteg 19.1 wahlweise am Kontrollkolben 12 oder am Steuerbolzen 20 und dementsprechend die Keilnut 19.2 am Steuerbolzen 20 bzw. Kontrollkolben 12 befinden kann. Am Kontrollkolben 12 ist axial formschlüssig eine im Futterkörper 1 axial verschiebbare Steuerstange 22 angeschlossen, durch die das Schaltglied 17 axial mit dem Kontrollkolben 12 verbunden und verstellbar ist. Das Schaltglied 17 ist ein über die Mantelfläche des Futterkörpers 1 radial abstehender schaltnocken, der in einer Axialnut 23 des Futterkörpers geführt ist und durch einen Schlitz 24 im Nutboden hindurch mit der Steuerstange 22 mittels einer Schraube 25 in Verbindung steht. Der Sensor 18 ist im Ausführungsbeispiel als induktiver Näherungsschalter ausgebildet, der vom Schaltglied 17 berührungslos gesteuert wird.

Der im vorderen Teil des Futterkörpers 1 angeordnete Kontrollkolben 12 besitzt einen axial aus der vorderen Stirnseite 1' des Futterkörpers 1 vorstehenden Kolbenhals 26, in dem sich eine von der Stirnseite 1' her zugängliche Einstellschraube 27 befindet, mit der die Kraft der Rückstellfeder 13 einstellbar ist. Die Rückstellfeder 13 liegt in einer Längsbohrung 28 des Kontrollkolbens 12, in der sich die Rückstellfeder 13 in Form einer Schraubenfeder über ein in der Längsbohrung 28 verschiebbares Widerlager 29 gegen die Einstellschraube 13 abstützt. Das andere, aus der Längsbohrung 28 herausragende Ende der Rückstellfeder 13 stützt sich am Futterkörper 1 ab, wozu der Futterkörper 1 mit einer das Federende zentrierenden Aufnahme 30 versehen ist. Im einzelnen ist der mit Druckmittel beaufschlagbare Zylinderraum 14 des Kontrollkolbens 12 durch eine im Futterkörper 1 zu dessen Stirnseite 1' hin offene Bohrung gebildet, die stirnseitig durch einen Zylinderdeckel 31 verschlossen ist, durch den hindurch abgedichtet der Kolbenhals 26 geführt ist. Der Zylinderdeckel 31 ist bündig mit der Stirnseite 1' des Futterkörpers 1.

Die Rückstellfeder 13 beaufschlagt den Kontrollkolben 12 axial nach vorn und den Steuerbolzen 20 über das Keilgetriebe 19 radial auswärts. In der Zeichnung befindet sich der Kontrollkolben 12 in der vorderen Endstellung, die seiner Sperrstellung entspricht. Aus dieser Sperrstellung kann sich der Kontrollkolben 12 unter der Wirkung des Druckmittels nur in der Zeichnung nach links bewegen und über die Steuerstange 22 und das Schaltglied 17 sowie den Sensor 18 den Drehantrieb der Maschine freigeben, wenn über das Keilgetriebe 19 der Steuerbolzen 20 entsprechend radial einwärts verstellbar ist, also an dieser Verstellung nicht durch Anschlag an der Steuerkurve 21 gehindert wird. Daher ist die Steuerkurve 21 im Bereich beider axialer Kurvenenden mit radial auswärts gerichteten Steuervorsprüngen 21.1 versehen, deren axiale Länge jeweils den Sicherheitsbereichen 16 des axialen Hubwegs des Antriebsglieds 5 entspricht. Diese Steuervorsprünge 21.1 schließen über Anlaufschrägen 21.2 an den dem Arbeitsbereich 16' des Antriebsgliedes 5 entsprechenden Teil 21.3 der Steuerkurve an. Entsprechende Anlaufschrägen 20.1 sind an dem der Steuerkurve 21 anliegenden Kopf 20.2 des Steuerbolzens 20 vorgesehen, so daß bei Verstellung des Antriebsglieds 5 aus dem Arbeitsbereich 16' in einen der beiden Sicherheitsbereiche 16 der Steuerbolzen 20 über diese Anlaufschrägen radial nach außen und damit der Kontrollkolben 12 über das Keilgetriebe 19 axial nach vorn gegen die Kraft des Druckmittels in die Sperrstellung gedrückt wird. Im einzelnen ist die Steuerkurve 21 durch den Boden einer axial am Antriebsglied 5 verlaufenden Steuernut 21.4 gebildet, in die der Steuerbolzen 20 mit seinem die Anlaufschrägen 20.1 tragenden Bolzenkopf 20.2 eingreift.

Im Ergebnis bewirkt die Funktionskontrolleinrichtung die Überprüfung von zwei Voraussetzungen für das wirksame Einspannen eines Werkstückes, ob sich nämlich das Spannglied 5 wirklich im Arbeitsbereich befindet, also die Sicherheitsbereiche 16 verlassen hat, und ob der Spanndruck ausreichende Größe besitzt. Insoweit setzt die Freigabe des Drehantriebs, also die Verstellung des Kontrollkolbens 12 in der Zeichnung nach links, voraus, daß die vom Druckmittel auf den Kontrollkolben 12 ausgeübte Kraft die entgegen gerichtete Kraft der Rückstellfeder 13 übersteigt. Die Kraft der Rückstellfeder 13 entspricht also einem dem Futter zugeordneten Mindestspanndruck. Die Größe dieses Mindestspanndrucks kann durch Einstellen der Kraft der Rückstellfeder 13 entsprechend gewählt werden. Die Kontrolle erfolgt bei rotierendem und stillstehendem Spannfutter, wobei das Futter im letzteren Fall lediglich so zu positionieren ist, daß das Schaltglied 17 dem Sensor 18 gegenübersteht. - Sind beide Voraussetzungen erfüllt, befindet sich der Kontrollkolben 12 und damit auch das Schaltglied 17 in ihrer axial rückwärtigen Endstellung, in der der Sensor 18 nicht aktiviert ist. Der Drehantrieb der Maschine ist freigegeben. Ist jedoch nur eine der beiden Voraussetzungen erfüllt, bleiben der Kontrollkolben 12 und das Schaltglied 17 in ihrer in der Zeichnung dargestellten vorderen Endstellung, wobei der Sensor 18 aktiviert ist und den Stillstand der Maschine bewirkt. Diese Arbeitsweise der Funktionskontrolleinrichtung sei noch an einigen Fehlerbeispielen weiter erläutert:

Ist der Betriebsdruck zu niedrig, befindet sich aber das Antriebsglied 5 in Arbeitsstellung, so verhindert doch die auf den Mindestdruck eingestellte Kraft der Rückstellfeder 13 ein Verschieben des Kontrollkolbens 12 aus der Sperrstellung.

Ist der Betriebsdruck ausreichend, hat aber das Antriebsglied 5 den Sicherheitsbereich 16 nicht verlassen, so kann der Steuerbolzen 20 nicht radial einwärts ausweichen und der Kontrollkolben 12 bleibt wiederum in seiner Sperrstellung stehen.

Ist der Betriebsdruck ausreichend, hat aber das Antriebsglied 5 den Arbeitsbereich 16' durchfahren und befindet sich im nachfolgenden Sicherheitsbereich 16, so kann der Kontrollkolben 12 zwar kurzzeitig aus der Sperrstellung axial nach hinten herausfahren, wird jedoch sofort anschließend zwangsweise über die Steuerkurve 21 des Antriebsglieds 5 und den Steuerbolzen 20 wieder nach vorn in die Sperrstellung gedrückt.

Fällt der Betriebsdruck während der Rotation des Spannfutters ab, so bewirkt die Kraft der Rückstellfeder 13 beim Unterschreiten des Mindestdrucks das Vorfahren des Kontrollkolbens 12 in die Sperrstellung.

**Patentansprüche**

1. Spanneinrichtung an Drehmaschinen mit einem Spannfutter, in dessen Futterkörper (1) Spannbacken (4) geführt sind, zu deren Verstellung ein im Futterkörper axial verstellbares Antriebsglied (5) vorgesehen ist, dessen Funktion durch eine auf den Drehantrieb der Maschine einwirkende Funktionskontrolleinrichtung überwacht wird und das zur Verstellung längs eines axialen Hubwegs als ein von einem Druckmittel beaufschlagbarer Spannkolben (9) ausgebildet oder an einen solchen Spannkolben angeschlossen ist, wobei die Funktionskontrolleinrichtung einen außerhalb des Spannfutters feststehenden Sensor (18), ein den Sensor betätigendes, am Außenumfang des Futterkörpers verstellbar angeordnetes Schaltglied (17) und einen das Schaltglied verstellenden Kontrollkolben (12) umfaßt, der gegen die Kraft einer Rückstellfeder (13) vom Druckmittel des Spannkolbens (9) beaufschlagt ist und durch das Antriebsglied (5) gegen vom Druckmittel bewirkte Verschiebungen in einer den Drehantrieb ausschaltenden Sperrstellung verriegelt bzw. verriegelbar ist, wenn das Antriebsglied (5) außerhalb eines Arbeitsbereiches (16') seines axialen Hubweges steht, dadurch gekennzeichnet, daß der parallel zur Futterachse verschiebbar angeordnete Kontrollkolben (12) über ein Keilgetriebe (19) mit einem radial zur Futterachse verschiebbar im Futterkörper (1) geführten Steuerbolzen (20) gekuppelt ist, dem als seinen Verschiebungsweg radial einwärts begrenzender Anschlag eine mit dem Antriebsglied (5) bewegte Steuerkurve (21) zugeordnet ist, wobei das Keilgetriebe (19) so ausgebildet ist, daß eine Verschiebung des Kontrollkolbens (12) aus seiner Sperrstellung mit einer radial einwärts gerichteten Verschiebung des Steuerbolzens (20) verbunden ist.

2. Spanneinrichtung nach Anspruch 1, dadurch gekennzeichnet, daß der Kontrollkolben (12) und der Steuerbolzen (20) durch das Keilgetriebe (19) aneinander zwangsgeführt sind, wozu das Keilgetriebe (19) aus einem zu den Achsen von Kontrollkolben (12) und Steuerbolzen (20) geneigt angeordneten Keilsteg (19.1) und einer ihn aufnehmenden Keilnut (19.2) besteht.

3. Spanneinrichtung nach Anspruch 1 oder 2, dadurch gekennzeichnet, daß am Kontrollkolben (12) axial formschlüssig eine im Futterkörper (1) axial verschiebbare Steuerstange (22) angeschlossen ist, durch die das Schaltglied (17) axial verstellbar ist.

4. Spanneinrichtung nach Anspruch 3, dadurch gekennzeichnet, daß das Schaltglied (17) ein über die Mantelfläche des Futterkörpers (1) radial abstehender Schaltnocken ist, der in einer Axialnut (23) des Futterkörpers geführt ist und durch einen Schlitz (24) im Nutboden hindurch mit der Steuerstange (22) in Verbindung steht.

5. Spanneinrichtung nach einem der Ansprüche 1 bis 4, dadurch gekennzeichnet, daß der Kontrollkolben (12) einen axial aus der Stirnseite des Futterkörpers (1) vorstehenden Kolbenhals (26) aufweist, in dem sich eine von der Stirnseite (1') her zugängliche Einstellschraube (27) befindet, mit der die Kraft der Rückstellfeder (13) einstellbar ist.

6. Spanneinrichtung nach Anspruch 5, dadurch gekennzeichnet, daß der Kontrollkolben (12) eine die Rückstellfeder (13) aufnehmende Längsbohrung (28) aufweist, in der sich die Rückstellfeder (13) in Form einer Schraubenfeder über ein in der Längsbohrung (28) verschiebbares Widerlager (29) gegen die Einstellschraube (27) abstützt, und daß die Rückstellfeder (13) mit ihrem aus der Längsbohrung (28) herausragenden anderen Ende am Futterkörper (1) anliegt.

7. Spanneinrichtung nach Anspruch 5 oder 6, dadurch gekennzeichnet, daß der mit Druckmittel beaufschlagbare Zylinderraum (14) des Kontrollkolbens (12) durch eine im Futterkörper (1) zu dessen Stirnseite (1') hin offene Bohrung gebildet ist, die stirnseitig durch einen Zylinderdeckel (31) verschlossen ist, durch den hindurch der Kolbenhals (26) abgedichtet geführt ist.

8. Spanneinrichtung nach Anspruch 7, dadurch gekennzeichnet, daß der Zylinderdeckel (31) bündig mit der Stirnseite (1') des Futterkörpers (1) ist.

9. Spannvorrichtung nach einem der Ansprüche 1 bis 8, dadurch gekennzeichnet, daß die Steuerkurve (21) durch den Boden einer axial am Antriebsglied (5) verlaufenden Steuernut (21.4) gebildet ist, in die der Steuerbolzen (20) mit einem Bolzenkopf (20.2) eingreift.

10. Spannvorrichtung nach einem der Ansprüche 1 bis 9, dadurch gekennzeichnet, daß die Steuerkurve (21) im Bereich beider axialer Kurvenenden radial auswärts gerichtete Steuervorsprünge (21.1) aufweist, deren axiale Länge jeweils einem Sicherheitsbereich (16) des axialen Hubwegs des Antriebsgliedes (5) entspricht, der an den Arbeitsbereich (16') anschließt und in dem über den Steuerkolben (20) der Kontrollkolben (12) in der Sperrstellung gehalten ist.

11. Spanneinrichtung nach Anspruch 10, dadurch gekennzeichnet, daß die Steuervorsprünge (21.1) über Anlaufschrägen (21.2) an die Steuerkurve anschließen, und daß entsprechende Anlaufschrägen (20.1) an dem der Steuerkurve (21) anliegenden Kopf (20.2) des Steuerbolzens (20) vorgesehen sind.

## Revendications

1. Dispositif de serrage installé sur des tours comportant un mandrin de serrage, dans le corps (1) duquel sont guidées des mâchoires de serrage (4), pour le réglage desquelles il est prévu un organe d'entraînement (5) qui est déplaçable axialement dans le corps du mandrin et dont le fonctionnement est contrôlé par un dispositif de contrôle de fonctionnement agissant sur le dispositif d'entraînement en rotation de la machine, et qui, pour produire un déplacement sur une course axiale, est réalisé sous la forme d'un piston de serrage (9) pouvant être chargé par un fluide sous pression ou est raccordé à un tel piston de serrage, le dispositif de contrôle de fonctionnement comportant un capteur (18) fixé à l'extérieur du mandrin de serrage, un organe de commutation (17) actionnant le capteur et installé de manière à être réglable sur le pourtour extérieur du corps du mandrin, et un piston de contrôle (12), qui déplace l'organe de commutation, est chargé par le fluide sous pression du piston de serrage (9) à l'encontre de l'action d'un ressort de rappel (13) et est ou peut être verrouillé par l'organe d'entraînement (5), contre tout déplacement provoqué par le fluide sous pression, dans une position de blocage excluant l'entraînement en rotation, lorsque l'organe d'entraînement (5) est situé à l'extérieur d'une zone de travail (16') de sa course axiale, caractérisé en ce que le piston de contrôle (12) monté de manière à être déplaçable parallèlement à l'axe du mandrin est accouplé, par l'intermédiaire d'un mécanisme à clavette à un axe de commande (20) guidé dans le corps (1) du mandrin de manière à être déplaçable radialement par rapport à l'axe du mandrin et auquel est associée, en tant que butée limitant la course de déplacement de l'axe radialement vers l'intérieur, une came de commande (21) déplacée au moyen de l'organe d'entraînement (5), le mécanisme à clavette (19) étant agencé de telle sorte qu'un déplacement du piston de commande (12) à partir de sa position de blocage est lié à un déplacement, dirigé radialement vers l'intérieur, du piston de commande (20).

2. Dispositif de serrage selon la revendication 1, caractérisé en ce que le piston de commande (12) et l'axe de commande (20) sont guidés selon un guidage forcé l'un contre l'autre au moyen du mécanisme à clavette (19), et à cet effet le mécanisme à clavette (19) est constitué par une barrette formant clavette (19.1) inclinée par rapport aux axes du piston de commande (12) et de l'axe de commande (20) et par une rainure de clavette (19.2) logeant la barrette formant clavette.

3. Dispositif de serrage selon la revendication 1 ou 2, caractérisé en ce qu'au piston de commande (12) est raccordé axialement, selon une liaison par formes complémentaires, une barre de commande (22) qui est déplaçable axialement dans le corps (1) de l'axe du mandrin et qui permet de régler axialement l'organe de commutation (17).

4. Dispositif de serrage selon la revendication 3, caractérisé en ce que l'organe de commutation (17) est une came de commutation, qui fait saillie radialement sur la surface enveloppe du corps (1) du mandrin, est guidée dans une fente axiale (23) du corps du mandrin et est reliée, à travers une fente (24) ménagée dans le fond de la rainure, à la barre de commande (22).

5. Dispositif de serrage selon l'une quelconque des revendications 1 à 4, caractérisé en ce que le piston de commande (12) possède un col (26), qui fait saillie axialement à partir de la face frontale du corps (1) du mandrin et dans lequel est située une vis de réglage (27), qui est accessible à partir de la face frontale (1') et à l'aide de laquelle on peut régler la force du ressort de rappel (13).

6. Dispositif de serrage selon la revendication 5, caractérisé en ce que le piston de commande (12) possède un perçage longitudinal (28), qui loge le ressort de rappel (13) et dans lequel le ressort de rappel (13) réalisé sous la forme d'un ressort hélicoïdal prend appui, par l'intermédiaire d'une butée (29) déplaçable dans un perçage longitudinal (28), contre la vis de réglage (27) et que le ressort de rappel (13) s'applique, par son autre extrémité, qui fait saillie hors du perçage longitudinal (28), contre le corps (1) du mandrin.

7. Dispositif de serrage selon la revendication 5 ou 6, caractérisé en ce que la chambre cylindrique (14) du piston de contrôle (12), qui peut être chargée par un fluide sous pression, est formée par un perçage s'ouvrant dans le corps (1) du mandrin en direction de la face frontale (1') de ce dernier et fermé frontalement par un couvercle (31) du cylindre, que le col (26) du piston traverse de façon étanche.

8. Dispositif de serrage selon la revendication 7, caractérisé en ce que le couvercle (31) du cylindre est situé de niveau avec la face frontale (1') du corps (1) du mandrin.

9. Dispositif de serrage selon l'une quelconque des revendications 1 à 8, caractérisé en ce que la came de commande (21) est formée par le fond d'une rainure de commande (21.4) qui est ménagée axialement dans l'organe d'entraînement (5) et dans laquelle l'axe de commande (20) s'engage par une tête (20.2).

10. Dispositif de serrage selon l'une quelconque des revendications 1 à 9, caractérisé en ce que la came de commande (21) possède, au niveau de ses deux extrémités axiales, des parties saillantes de commande (21.1), qui sont dirigées radialement vers l'extérieur et dont la longueur axiale correspond respectivement à une zone de sécurité (16) de la course axiale de l'organe d'entraînement (5), qui se raccorde à la zone de travail (16') et dans laquelle le piston de commande (12) est maintenu dans la position de blocage par l'intermédiaire du piston de commande (20).

11. Dispositif de serrage selon la revendication 10, caractérisé en ce que les parties saillantes de commande (21.1) se raccordent par l'intermédiaire de rampes de montée (21.2) à la came de commande et que des rampes correspondantes de montée (20.1) sont prévues sur la tête (20.2) de l'axe de commande (20), appliquée sur la came de commande (21).

**Claims**

1. A clamping arrangement on turning machines with a chuck having a chuck body (1) in which clamping jaws (4) are guided, wherein a drive member (5) which is axially displacable in the chuck body is provided for displacement of the clamping jaws (4), the function of the drive member (5) being monitored by a function monitoring means acting on the rotary drive of the machine and the drive member (5), for displacement along an axial stroke path, being in the form of a clamping piston (9) which can be actuated by a pressure fluid, or being connected to such a clamping piston, wherein the function monitoring means includes a stationary sensor (18) outside the chuck, a switch member (17) for actuating the sensor, which is arranged displaceably at the outside circumference of the chuck body, and a monitoring piston (12) which displaces the switch member and which is acted upon the pressure fluid of the clamping piston (9) against the force of a return spring (13) and which is or can be locked by the drive member (5) to prevent displacements caused by the pressure fluid in a locking position of switching off the rotary drive when the drive member (5) is outside a working region (16') of its axial stroke path, characterised in that the monitoring piston (12) which is arranged displaceably parallel to the axis of the chuck is coupled by way of a wedge transmission means (19) to a control pin (20) which is guided displaceably in the chuck body (1) radially with respect to the axis of the chuck and with which there is associated a control cam (21) which is moved with the drive member (5), serving as an abutment for radially inwardly restricting the path of movement of the control pin (20), wherein the wedge transmission means (19) is so designed that displacement of the monitoring piston (12) out of its locking position is linked to a radially inwardly directed displacement of the control pin (20).

2. A clamping arrangement according to claim 1 characterised in that the monitoring piston (12) and the control pin (20) are positively guided against each other by the wedge transmission means (19), for which purpose the wedge transmission means (19) comprises a wedge spline portion (19.1) which is arranged inclinedly relative to the axes of the monitoring piston (12) and the control pin (20), and a wedge groove (19.2) which accomodates the wedge spline portion (19.1).

3. A clamping arrangement according to claim 1 or claim 2 characterised in that axially positively connected to the monitoring piston (12) is a control bar (22) which is axially displaceable in the chuck body (1) and by which the switch member (17) is axially displaceable.

4. A clamping arrangement according to claim 3 characterised in that the switch member (17) projection which projects radially beyond the circumferential surface of the chuck body (1) an which is guided in an axial groove (23) in the chuck body and which is connected to the control bar (22) through a slot (24) in the bottom of the groove.

5. A clamping arrangement according to one of claims 1 to 4 characterised in that the monitoring piston (12) has a piston neck portion (26) which projects axially out of the end of the chuck body (1) and in which there is disposed an adjusting screw (27) which is accessible from the end (1') and with which the force of the return spring (13) can be adjusted.

6. A clamping arrangement according to claim 5 characterised in that the monitoring piston (12) has a longitudinal bore (28) which accomodates the return spring (13) and in which the return spring (13), in the form of a coil spring, is supported against the adjusting screw (27) by way of a support (29) which is displaceable in the longitudinal bore (28), and that the return spring (13) bears against the chuck body (1) by way of the other end of the return spring which projects out of the longitudinal bore (28).

7. A clamping arrangement according to claim 5 or claim 6 characterised in that the cylinder chamber (14) of the monitoring piston (12), which can be acted upon by pressure fluid, is formed by a bore which is open in the chuck body (1) towards the end (1') thereof and which is closed at the end by a cylinder cover (31) through which the piston neck portion (26) is sealingly passed.

8. A clamping arrangement according to claim 7 characterised in that the cylinder cover (31) is flush with the end (1') of the chuck body (1).

9. A clamping arrangement according to one of claims 1 to 8 characterised in that the control cam (21) is formed by the bottom of a control groove (21.4) which extends axially on the drive member (5) and into which the control pin (20) engages with a pin head (20.2).

10. A clamping arrangement according to one of claims 1 to 9 characterised in that the control cam (21) has control projections (21.1) which are directed radially outwardly in the region of both axial ends of the control cam, the axial length of the control projections each corresponding to a respective safety region (16) of the axial stroke path of the drive member (5) which adjoins the working region (12') and in which the monitoring piston (12) is held in the locking position by way of the control piston (20).

11. A clamping arrangement according to claim 10 characterised in that the control projections (21.1) join the control cam by way of inclined run-on surfaces (21.2) and that corresponding inclined run-on surfaces (20.1) are provided on the head (20.2) of the control pin (20), which bears against the control arm (21).

Fig. 1

Fig. 2